# EUROPEAN PATENT APPLICATION

(11) **EP 1 210 900 A1**
(43) Date of publication of application: **05.06.2002**
(21) Application number: 00204287.7
(22) Date of filing: 01.12.2000
(51) Int. Cl.: A47L 9/24

(54) **A coupling device for a detachable connection of a suction hose to a vaccum cleaner housing**

(71) Applicant: Nilfisk Advance A/S, 2605 Brondby (DK)
(72) Inventor: Sjöberg, Jan, 662 37 Aamaal (DK)
(74) Representative: Elmeros, Claus

(57) **Abstract**

The invention concerns a coupling device for a detachable connection of a suction hose to the inlet opening in a vacuum cleaner housing, said inlet opening including a socket for receiving a tube connecting piece mounted on the suction hose, said connecting piece including latch means that are realisably connected to the socket and sealing means interacting with the socket, wherein the connecting piece includes a plurality of symmetrically arranged resilient latches and that said latches are realisably connected to openings that are formed in an external wall member that is integrally formed on the housing. Hereby, a snap fit connection between the suction hose and the tank element of the housing is provided where the connecting piece of the hose connects to the housing without extra connection parts. Thus, the number of parts involved in a coupling device according to the invention is reduced making the coupling device cheaper and quicker to manufacture.

## Description

The present invention relates to a coupling device for a detachable connection of a suction hose to the inlet opening in a vacuum cleaner housing, said inlet opening including a socket for receiving a tube connecting piece mounted on the suction hose, said connecting piece including latch means that are realisably connected to the socket and sealing means interacting with the socket.

A coupling device of this kind is known from EP-A-0 328 494. This coupling device consists of a latch that is fixed to a connecting sleeve that engages corresponding receiving means in the vacuum cleaner housing. The suction hose is fixed to a connecting piece that is received in a cylindrical socket of the housing. The sleeve is secured to a cylindrical tube connecting piece so that the hose and the connecting piece is rotatable in the sleeve. The connection piece is provided with a sealing ring that engages the inner cylindrical surface of the socket for providing an air tight seal. Hereby a snap fit connection between the suction hose and the vacuum cleaner housing is provided. However this coupling device has some drawbacks both in the production phase and the during the use of the vacuum cleaner.

In particular the receiving means for receiving the latch in the housing is relatively difficult and expensive to manufacture. Another drawback is that the coupling device may be flexed out of alignment causing a puncture of the air tight sealing. The vacuum cleaner is often being pulled at the suction hose by the user. The pulling action is often inclined as the vacuum cleaner is pulled around comers, etc. This flexes the coupling device in the socket and the coupling between the hose and the housing is no longer air tight.

Thus, the object by the present invention is to provide an improved coupling device that is more simple to manufacture and secures an air tight snap fit connection between the hose and the housing of the vacuum cleaner.

This object is achieved by a coupling device of the initially mentioned kind, wherein the connecting piece includes a plurality of symmetrically arranged resilient latches and that said latches are realisably connected to latch receiving means that are formed in an external wall member integrally formed on the housing.

Hereby, a snap fit connection between the suction hose and the tank element of the housing is provided where the connecting piece of the hose connects to the housing without extra connection parts. Thus, the number of parts involved in a coupling device according to the invention is reduced making the coupling device cheaper and quicker to manufacture. By providing a plurality of latches arranged symmetrically around the tubular connection piece, an air tight fit is ensured also when the suction hose is being pulled in an angle. The feature of hooking the connecting piece to an external wall member outside the housing wall, means that there is no hole through to the dust compartment of the vacuum cleaner. Normally, an extra element must be used for sealing the holes or more complicated moulding tool elements are needed, such as collapsible cores. The absence of holes in the dust compartment contributes to a simple design and to ensuring an air tight fit of the suction hose in the vacuum cleaner housing. The external wall member is integrally formed in the housing, with means that it is produced together with the housing in a single injection moulding process. It also allows for a more simple moulding process, since no collapsible core is needed. The holes for the snap can be made with the same slide moulding part of the moulding tool that makes the hole for the inlet/socket. All other parts are made with normal parting of the tool. This allows for the use of a cheaper injection moulding tool and a more simple moulding machine may be used in comparison with the known coupling device, just as the run-in time is shorter, the cycle time is slightly shorter and the operation is more fail safe in comparison.

In the preferred embodiment of a coupling device according to the invention, the sealing means include a conical outer surface on the connecting piece and a correspondingly shaped conical surface in the socket for receiving said conical outer surface. Hereby, the need for a separate sealing ring is eliminated. The conic surfaces of the tank housing and the connecting piece provide the air tight sealing since the suction hose and the connected housing is under partial vacuum and the two parts are sucked together. Moreover, the conic surfaces also ensures an alignment of the two parts of the coupling device preventing the problems associated with the angled pulling of the suction hose.

In a preferred embodiment, the connecting piece is mounted to the suction hose at one first end and provided with side openings with a reflection plate at the opposite end. By this embodiment, the particles that are sucked into the housing tank are prevented from making direct impact with the dust collection bag situated therein, whereby the risk of perforating the bag is eliminated.

In the preferred embodiment, the connecting piece is provided with two resilient latches. This allows for a particular simple device coupling device in order to obtain the advantages explained above.

In the following, the invention is described in detail under reference to the accompanying drawings, in which:
- fig. 1: is a side view of a vacuum cleaner,
- fig. 2: is an isometric top view of a coupling device according to a preferred embodiment of the invention in the assembled position,
- fig. 3: is a bottom view of same, and
- fig. 4: is a cross section view of the coupling device.

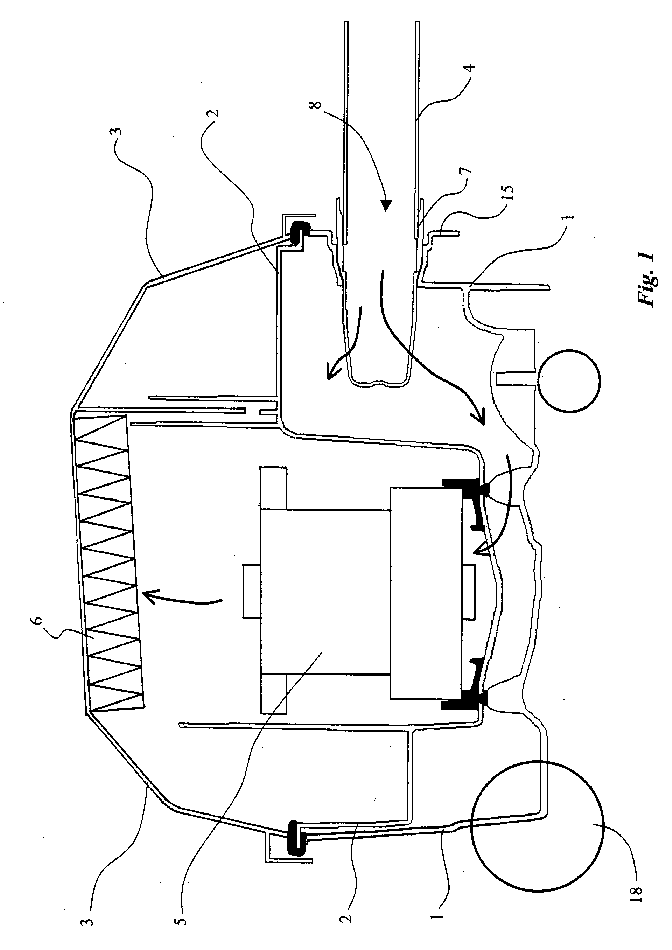

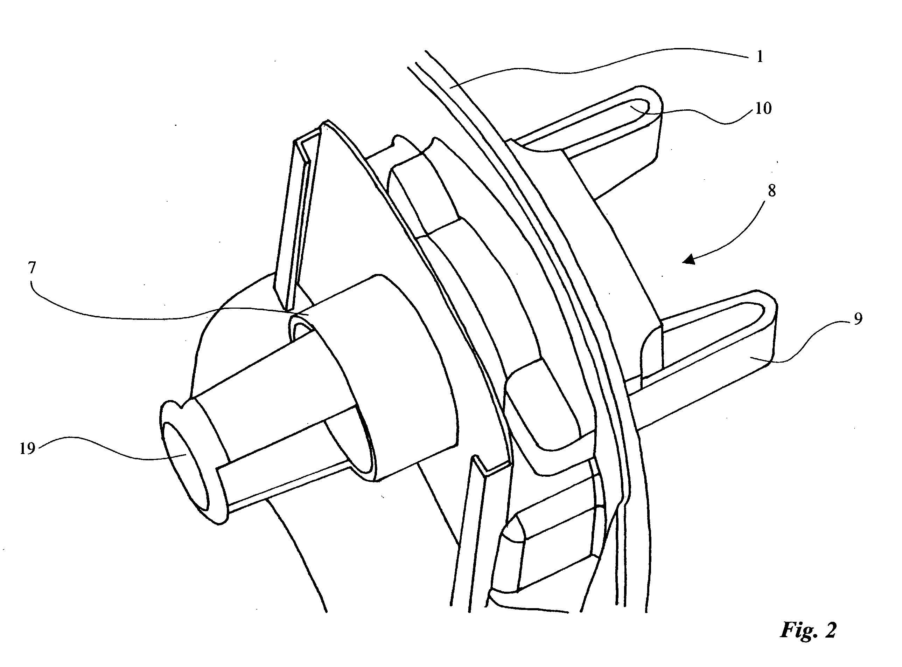

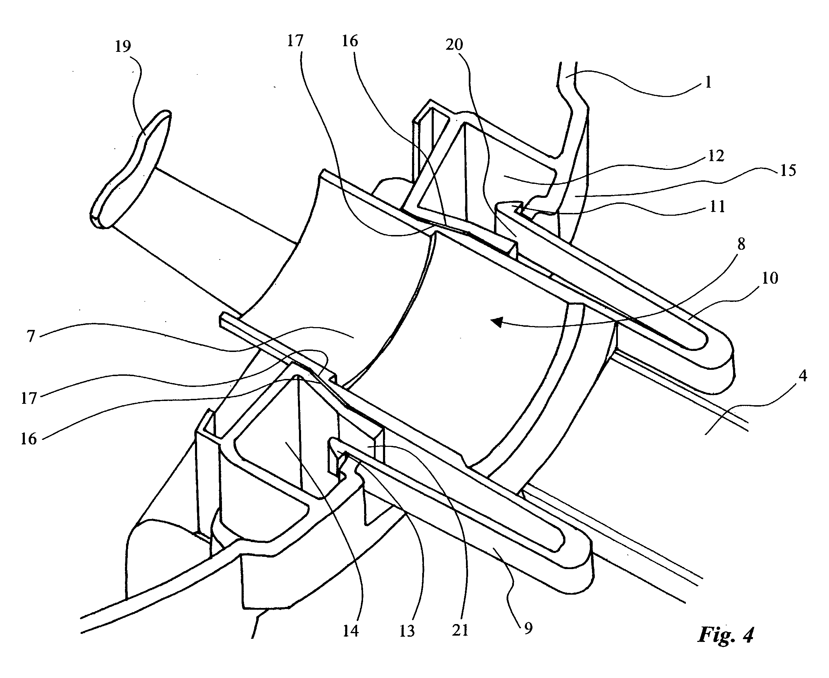

In figure 1 a schematic cross-section side view of a vacuum cleaner is shown. The vacuum cleaner comprises a housing with three elements: a tank element 1, a middle chassis element 2 and a top cover element 3. A suction hose 4 is connected to the tank element 1 via a coupling device (see figs. 2 to 4). In the chassis element 2 an air flow generator 5 is provided. In the tank element 1 dust collection means (not shown) may be provided and the tank element 1 is also fitted with wheels 18. The interior space of the tank element 1 is under partial vacuum as the air flow generator 5 sucks air out of the tank compartment and blows into the second air compartment under the top cover 3. In the top compartment 3, the air is led through an air exhaust system 6 that may include noise reduction means, air filtration means etc.

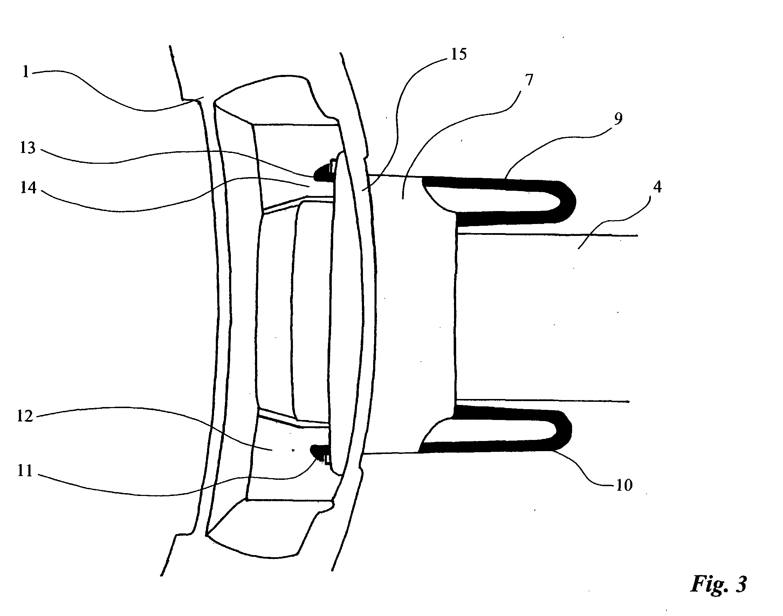

In figure 2 to 4, a portion of the vacuum cleaner housing 1 is shown which has a socket 8 and a connecting piece 7. The suction hose 4 is fixed to a connecting piece 7 that is realisably connected to the socket 8. The hose 4 may be fixed to the connecting piece 7 by bonding, by use of an expanding ring or in any other suitable manner. The connecting piece 7 is inserted into the socket 8 (in the figures 2-4 the assembled coupling is shown). The connecting piece 7 is provided with two symmetrically arranged resilient latches 9, 10 with hooks 11, 13 that engages corresponding receiving means 12, 14; 20, 21. The receiving means include cavities 12, 14 between the external wall member 15 (see fig. 3) integrally formed on the outside of the genuine wall housing 1. The latches 9, 10 are inserted through openings 20, 21 in the external wall member 15 whereby the latch hooks 11, 13 enters the cavities 12, 14 behind the external wall member 15. Hereby, the connecting piece 7 is realisably connected to the housing 1 in a non-rotatable manner that provides a reliable connection as bending forces applied to the connecting piece 7 due to an angular pulling of the suction hose 4 does not result in a displacement of the connecting piece 7 in the socket 8.

The socket 8 is provided with a conic surface 16 that is engaged by a corresponding conic surface 17 on the connecting piece 7. Hereby, the connection is provided with an air tight seal in particular when partial vacuum is established in the tank housing 1. As the conic surfaces 16, 17 are engaged directly to each other the vacuum cleaner is sealed efficiently without the need of additional separate sealing members. The hose 4 may easily be connected and disconnected from the socket 8 and the external wall member 15 of the housing 1 by pressing together the latches 9, 10, situated symmetrically on each side of the hose 4, an inserting or withdrawing the connecting piece 7 from the socket 8.

By the invention, it is appreciated that a coupling device may be obtained with relatively few parts in a thermoplastic material and that these parts are designed in geometric shapes being adapted for production by a relatively simple injection moulding process.

## Claims

1. A coupling device for a detachable connection of a suction hose to the inlet opening in a vacuum cleaner housing, said inlet opening including a socket for receiving a tube connecting piece mounted on the suction hose, said connecting piece including latch means that are realisably connected to the socket and sealing means interacting with the socket,
**characterised in that**
the connecting piece includes a plurality of symmetrically arranged resilient latches and that said latches are realisably connected to latch receiving means that are formed in an external wall member integrally formed on the housing.

2. A coupling device according to claim 1, wherein the sealing means include a conical outer surface on the connecting piece and a correspondingly shaped conical surface in the socket for receiving said conical outer surface.

3. A coupling device according to claim 1 or 2, wherein the connecting piece is mounted to the suction hose at one first end and provided with side openings with a reflection plate at the opposite end.

4. A coupling device according to any of claims 1 to 3, wherein the connecting piece is provided with two resilient latches.
